# EUROPÄISCHE PATENTANMELDUNG

(11) **EP 1 659 673 A1**
(43) Veröffentlichungstag der Anmeldung: **24.05.2006**
(21) Anmeldenummer: 05110584.9
(22) Anmeldetag: 10.11.2005
(51) Int. Cl.: H02K 5/22, H01R 13/74, H01R 31/06

(54) **Gehäuseanordnung und Adapter**

(30) Priorität: 17.11.2004 DE 102004055432
(71) Anmelder: Hella KGaA Hueck & Co., 59552 Lippstadt (DE)
(72) Erfinder: Kleine-Weischede, Jost, 59174 Kamen (DE); Nölkel, Daniel, 59555 Lippstadt (DE)

(57) **Zusammenfassung**

Gehäuseanordnung zur Aufnahme eines elektrischen Bauteiles in einem Kraftfahrzeug, umfassend ein Gehäuse (1), sowie eine Schnittstelle (9, 101, 201) zur Verbindung mit dem Bordnetz des Kraftfahrzeuges, wobei mindestens ein an dem Gehäuse (1) anbringbarer Adapter (8, 100, 200) vorgesehen ist, der mit mindestens der Schnittstelle (9, 101, 201) zur Verbindung mit dem Bordnetz des Kraftfahrzeuges ausgestattet ist, sowie Adapter für eine Gehäuseanordnung zur Aufnahme eines elektrischen Bauteiles in einem Kraftfahrzeug, umfassend ein Verbindungsmittel (16) zum Anschluss an ein Gehäuse (1), sowie eine Schnittstelle (9, 101, 201) zum Anschluss an eine Bordelektronik eines Kraftfahrzeuges.

## Beschreibung

Die vorliegende Erfindung betrifft eine Gehäuseanordnung zur Aufnahme eines elektrischen Bauteiles in einem Kraftfahrzeug gemäß dem Oberbegriff des Anspruchs 1, sowie einen Adapter gemäß Anspruch 21.

### STAND DER TECHNIK

Gehäuseanordnungen der zuvor genannten Art sind hinreichend bekannt. Beispielsweise wird in der DE 101 19 178 A1 ein Stellantrieb mit einem Gehäuse offenbart, wobei das Gehäuse mit einer angeformten fahrzeugherstellerspezifischen Schnittstelle für einen zugeordneten fahrzeugherstellerspezifischen Stecker ausgestattet ist.

Eine derartige Gehäuseanordnung ist jedoch mit Nachteilen behaftet, insbesondere für den Fall, dass identische elektrische Bauteile von unterschiedlichen Kraftfahrzeugherstellern bezogen werden, müssen unterschiedliche Gehäuseanordnungen mit unterschiedlichen fahrzeugherstellerspezifischen Schnittstellen bevorratet und verbaut werden. Hieraus ergibt sich, dass eine Anzahl von Gehäusewerkzeugen zur Herstellung der Gehäuseanordnung erstellt und freigeprüft werden müssen. Auch müssen jeweils unterschiedliche Gehäuseanordnungen bevorratet werden. Letztendlich entstehen hierdurch hohe Kosten.

Hier setzt die vorliegenden Erfindung an und macht es sich zur Aufgabe, eine Gehäuseanordnung für ein elektrisches Bauteil in einem Kraftfahrzeug bereitzustellen, die auf einfache Art und Weise an unterschiedliche fahrzeugherstellerspezifische Schnittstellen anpassbar ist.

### VORTEILE DER ERFINDUNG

Erfindungsgemäß wird diese Aufgabe durch die kennzeichnenden Merkmale des Anspruchs 1 gelöst. Dadurch, dass mindestens ein an dem Gehäuse anbringbarer Adapter vorgesehen ist, der mit mindestens der Schnittstelle zur Verbindung mit dem Bordnetz des Kraftfahrzeuges ausgestattet ist, können die oben beschriebenen Nachteile abgestellt werden. Insbesondere können Adapter wesentlich günstiger hergestellt werden und mit geeigneten Schnittstellen des Fahrzeugherstellers versehen werden. Demnach muss bei der Gestaltung des Gehäuses keine Rücksicht auf die Schnittstelle des Fahrzeugherstellers genommen werden, so dass einheitliche Gehäuse für die elektrischen Bauteile hergestellt werden können und beispielsweise vor der Auslieferung lediglich mit einem Adapter versehen werden, der mit einer entsprechenden fahrzeugherstellerspezifischen Schnittstelle ausgestattet ist.

In einer vorteilhaften Weiterbildung der vorliegenden Erfindung kann vorgesehen sein, dass der Adapter durch eine Anschlusseinrichtung mit dem Gehäuse verbunden ist. Hier können geeignete Verbindungskonzepte realisiert werden. Beispielsweise kann eine einfache formschlüssige Rastverbindung vorgesehen sein, welche den Adapter durch Aufstecken mit dem Gehäuse verbindet.

Auch kann vorgesehen sein, dass die Anschlusseinrichtung einen gehäuseseitigen Anschlussflansch und ein adapterseitiges Verbindungsmittel umfasst. Auch durch diese Trennung lassen sich angepasste Verbindungskonzepte realisieren.

In einer vorteilhaften Ausgestaltung der vorliegenden Erfindung kann vorgesehen sein, dass Adapter vorgesehen sind, die mit unterschiedlichen Schnittstellen, jedoch mit einem einheitlichen Verbindungsmittel ausgestattet sind. Durch diese Maßnahme lässt sich in vorteilhafter Weise das sparsame Gehäusekonzept umsetzen, da das Gehäuse mit lediglich einem zur Aufnahme des Verbindungsmittels geeigneten Anschlussflansch ausgestattet sein muss.

Es kann weiterhin vorteilhafterweise vorgesehen sein, dass dem einheitlichen Verbindungsmittel ein einheitlicher gehäuseseitiger Anschlussflansch zugeordnet ist. Auch durch diese Maßnahme wird zur Bereitstellung einer preiswerten Gehäuseanordnung beigetragen.

In einer weiteren vorteilhaften Weiterbildung der vorliegenden Erfindung kann vorgesehen sein, dass das Gehäuse eine erste Gehäusehälfte und eine zweite Gehäusehälfte umfasst. Durch die Teilung des Gehäuses lassen sich geeignete elektrische auf einfache Art und Weise in das Gehäuse integrieren.

Auch kann vorteilhafterweise vorgesehen sein, dass der Anschlussflansch einen zylindrischen Kragen umfasst. Ein zylindrischer Kragen kann insbesondere dazu geeignet sein, eine sichere Aufnahme des Verbindungsmittels zu gewährleisten, insbesondere zur Gewährleistung ausreichender Zugfestigkeit.

Es kann weiterhin vorteilhafterweise vorgesehen sein, dass der Anschlussflansch mit mindestens einer Nase ausgestattet ist. Mit einer hervorstehenden Nase kann auf einfache Art und Weise eine Verdrehsicherung des Adapters sichergestellt werden. Auch kann durch Kombination verschiedener Nasen eine Codiereinrichtung bereitgestellt werden.

In einer weiteren vorteilhaften Ausgestaltung der vorliegenden Erfindung kann vorgesehen sein, dass der Anschlussflansch mit einer Dichtungsaufnahme ausgestattet ist. Entsprechend kann die Gehäuseanordnung auch bei feuchten Witterungsverhältnissen eingesetzt werden, ohne dass von dieser Seite Feuchtigkeit in das Gehäuse eindringen könnte.

Es kann weiterhin vorteilhafterweise vorgesehen sein, dass das Verbindungsmittel eine Anzahl von Zapfen mit endseitigen Rasten umfasst. Die Zapfen können als Federelemente wirken und die Rasten eine geeignete formschlüssige Verbindung mit dem Anschlussflansch eingehen.

In einer weiteren vorteilhaften Ausgestaltung der vorliegenden Erfindung kann vorgesehen sein, dass die Zapfen Zwischenräume zum Eingriff der mindestens einen Nase ausbilden. Durch diese Maßnahme kann eine geeignete Aufnahme der Nasen zur Verdrehsicherheit bereitgestellt werden.

Auch kann vorgesehen sein, dass das Verbindungsmittel mit Kontaktfahnen ausgestattet ist, die dazu geeignet sind zumindest abschnittsweise in das Gehäuse hineinzuragen. Dementsprechend bietet sich eine einfache Anschlussmöglichkeit für im Gehäuse aufgenommene elektrische Bauteile.

In einer weiteren Ausgestaltung der vorliegenden Erfindung kann vorgesehen sein, dass das Verbindungsmittel mit einer Dichtung ausgestattet ist. Dementsprechend kann die Gehäuseanordnung ebenfalls unter feuchten Bedingungen eingesetzt werden. Auch kann die Dichtung eine ausgleichende Funktion, insbesondere für Fertigungstoleranzen übernehmen.

Ein vorteilhafter Anwendungsfall für die erfindungsgemäße Gehäuseanordnung liegt darin, dass es sich bei dem elektrischern Bauteil um einen Stellantriebsmotor handelt.

Auch kann vorteilhafterweise vorgesehen sein, dass der Stellantriebsmotor eine Kontaktfahnenaufnahme zur Aufnahme der Kontaktfahnen aufweist. Dementsprechend kann eine elektrische Verbindung bereits mit dem Anbringen des Adapters hergestellt werden.

Es kann weiterhin vorteilhafterweise vorgesehen sein, dass der Adapter ein Adaptergehäuse aufweist, wobei das Verbindungsmittel an das Adaptergehäuse angeformt ist und die Schnittstelle innerhalb des Adaptergehäuses ausgeformt ist. Eine derartige Ausgestaltung des Adapters stellt eine erste vorteilhafte Ausgestaltung des Adapters dar.

Alternativ kann ebenfalls vorteilhafterweise vorgesehen sein, dass ein Adapter einen Stecker aufweist, wobei das Verbindungsmittel dem Stecker zugeordnet ist, wobei der Adapter weiterhin eine Buchse aufweist, wobei eine Schnittstelle innerhalb der Buchse vorgesehen ist, wobei ein Kabel zwischen Stecker und Buchse vorgesehen ist.

Im Rahmen dieser vorteilhaften Ausgestaltung des Adapters kann vorgesehen sein, dass die Buchse mit einem Clip versehen ist. Entsprechend ergeben sich vorteilhafte Befestigungsmöglichkeiten für die Buchse.

Es kann weiterhin vorteilhafterweise vorgesehen sein, dass die Kontaktfahnen mit elektrischen Anschlüssen innerhalb der Schnittstellen verbunden sind.

Auch kann zur Anpassung an unterschiedliche Einbaumöglichkeiten des Gehäuses vorgesehen sein, dass Kontaktfahnen und Schnittstellen wahlweise gleichgerichtet oder rechtwinkelig zueinander ausgerichtet sind.

Eine weitere Aufgabe der vorliegenden Erfindung liegt darin, einen geeigneten Adapter bereitzustellen, mit dem sich die Anzahl der zu bevorratenden Gehäuse bei einem Zulieferer erheblich vermindern lässt.

Erfindungsgemäß wird diese Aufgabe durch einen Adapter gemäß Anspruch 21 gelöst, da hier eine Bauform eines Gehäuses bzw. einer Gehäuseanordnung mit einem elektrischen Bauteil, für eine beliebige Anzahl von Fahrzeugherstellern produziert werden kann, da lediglich ein geeigneter Adapter mit geeigneter Schnittstelle hergestellt werden muss.

### ZEICHNUNGEN

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Gehäuseanordnung für ein elektrisches Bauteil in einem Kraftfahrzeug in einer seitlichen Ansicht und ein Adapter in einer seitlichen Ansicht;
- Fig. 2: eine Gehäusehälfte eines erfindungsgemäßen Gehäuses mit einem angeflanschten Adapter;
- Fig. 3: eine Schnittansicht A-A gemäß Fig. 3;
- Fig. 4: eine Draufsicht auf ein erfindungsgemäßes Gehäuse mit eingesetztem Stellmotor;
- Fig. 5a bis 5f: weitere Ansichten des Adapters gemäß Fig. 1
- Fig. 6a bis 6f: eine weitere Ausführungsform eines Adapters für eine erfindungsgemäße Gehäuseanordnung;
- Fig. 7a bis 7h: eine weitere Ausführungsform eines Adapters für eine erfindungsgemäße Gehäuseanordnung;

### BESCHREIBUNG DER AUSFÜHRUNGSBEISPIELE

Eine erfindungsgemäße Gehäuseanordnung für ein elektrisches Bauteil in einem Kraftfahrzeug umfasst im Wesentlichen ein Gehäuse 1, bestehend aus einer ersten Gehäusehälfte 2 und einer zweiten Gehäusehälfte 3, sowie einen Adapter 8, 100, 200, wobei der Adapter über eine Anschlusseinrichtung mit dem Gehäuse 1 verbunden ist und der Adapter 8, 100, 200 mit einer fahrzeugherstellerspezifischen Schnittstelle 9, 101, 201 zum Anschluss an das Bordnetz des Kraftfahrzeuges ausgestattet ist.

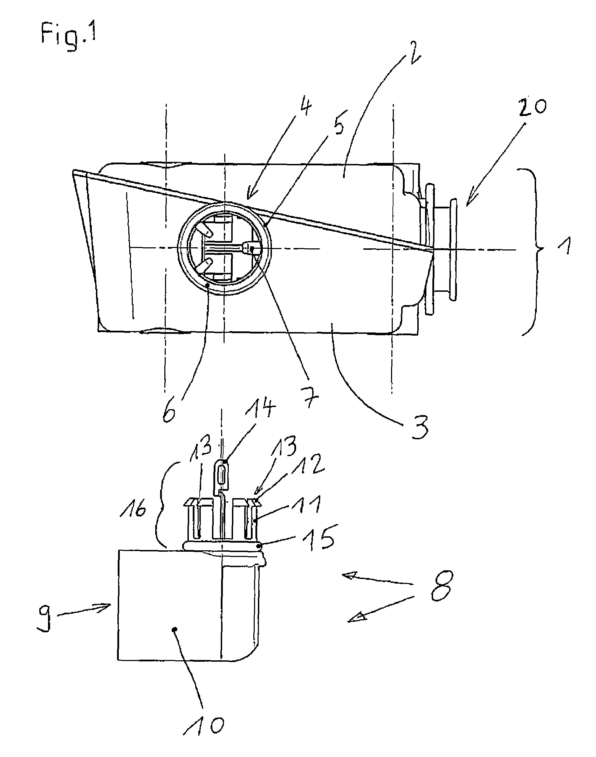

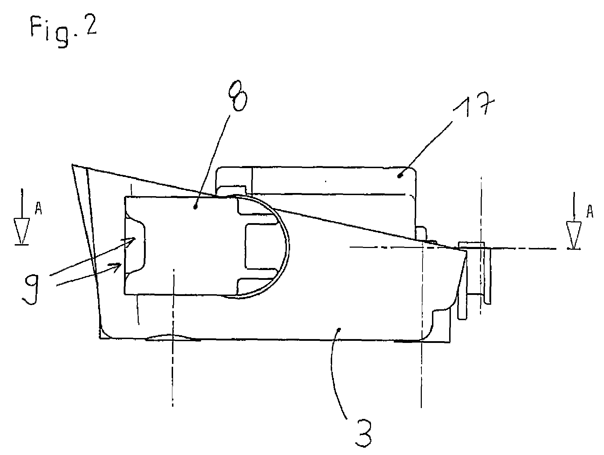

Zunächst wird auf Fig. 1 bis 5 Bezug genommen.

Die Anschlusseinrichtung umfasst sowohl einen gehäuseseitigen Anschlussflansch 4 als auch ein adapterseitiges Verbindungsmittel 16.

Der Anschlussflansch 4 umfasst im Wesentlichen einen zylindrischen Kragen 5 in dem jeweils Nasen 7 angeordnet sind, die innerhalb des Kragens 5 in axialer Richtung verlaufen. Die Nasen 7 können an unterschiedlichen Positionen angeordnet sein und insbesondere unterschiedliche Abmaße, beispielsweise Breiten oder Längen aufweisen, so dass die Aufnahme eines zugeordneten Verbindungsmittels 16 in lediglich einer vorbestimmbaren Lage ermöglicht wird. Des Weiteren ist vorgesehen, dass der Kragen 5 kopfseitig eine Dichtungsaufnahme 6 in Form einer umlaufenden Aussparung aufweist.

Eine bevorzugte Ausführungsform des Adapters 8 weist neben dem bereits angesprochenen Verbindungsmittel 16, ein Adaptergehäuse 10, sowie eine fahrzeugherstellerspezifische Schnittstelle 9 auf. Das Verbindungsmittel 16 umfasst in der hier dargestellten bevorzugten Ausführungsform eine zylinderförmige Anordnung aus Zapfen 11, die an ihrem freien Ende mit einer Raste 12 ausgestattet sind, wobei die Rasten 12 dazu geeignet sind, den Anschlussflansch 4 zu hintergreifen und eine Verbindung zwischen Adapter 8 und Gehäuse 1 herzustellen. Des Weiteren ist das Verbindungsmittel 16 mit einer Dichtung 15 ausgestattet, die im montierten Zustand des Adapters 8 von der Dichtungsaufnahme 6 aufgenommen wird. Es ist weiterhin vorgesehen, dass die Zapfen 11 Zwischenräume 13 ausbilden, die sich in ihren Abmaßen, insbesondere hinsichtlich des Abstandes zum nächsten Zapfen 11 unterscheiden. Zusammen mit der bzw. den Nasen 7 ergibt sich eine Einrichtung zur Lagevorgabe des Adapters 8 in Bezug auf den Anschlussflansch 4 bzw. das Gehäuse 1. In der hier dargestellten bevorzugten Ausführungsform kann der Adapter 8 in lediglich einer Position in den Anschlussflansch 4 eingebracht werden. Denkbar sind selbstverständlich auch Einrichtungen zur Lagevorgabe, die zwei oder mehrere diskrete Positionen erlauben. Auch ist denkbar, dass die Einrichtung zur Lagevorgabe als Codiereinrichtung weitergebildet ist, die jeweils eine Zuordnung einer Anzahl von ausgewählten Adaptern 8 zu einem Gehäuse 1 bzw. einen Adapter 8 zu einer Anzahl von Gehäusen 1 ermöglicht. Dies wäre beispielsweise durch Variation der Anzahl der Nasen 7 bzw. Abmaße und Anordnung der Nasen 7 als auch durch Variation der Anzahl der Zwischenräume 13 bzw. Abmaße und Anordnung der Zwischenräume 13 auf einfache Art und Weise realisierbar.

Zur elektrischen Kontaktierung eines innerhalb des Gehäuses 1 vorgesehenen Stellmotors 17 sind Kontaktfahnen 14 vorgesehen, die sich im montierten Zustand des Adapters 8 in das Gehäuse 1 erstrecken und vorzugsweise die Zapfen 11 überragen. Die Kontaktfahnen 14 werden vorzugsweise über elektrische Leitungen (nicht dargestellt) mit der Fahrzeugherstellerschnittstelle 11 verbunden.

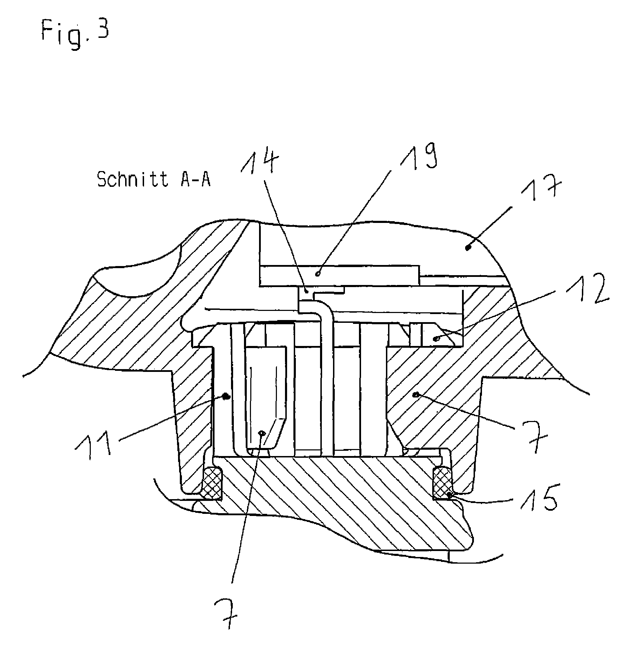

In Fig. 3 ist erkennbar, wie das Verbindungsmittel 16 innerhalb des Anschlussflansches 4 aufgenommen ist. Insbesondere ist dieser Darstellung entnehmbar, wie die Nasen 7 in die zugeordneten Zwischenräume 13 eingreifen. Auch ist erkennbar, wie die Rasten 12 den zylindrischen Kragen 5 hintergreifen. Denkbar sind selbstverständlich weitere Anschlusseinrichtungen, die eine leichte Verbindung zwischen Gehäuse und Adapter ermöglichen.

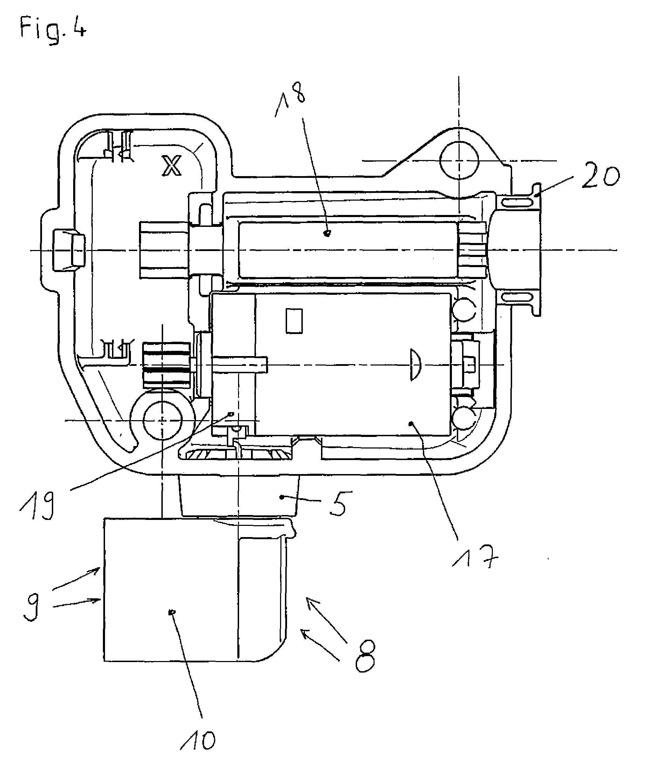

In der Fig. 4 ist erkennbar, wie der Stellantriebsmotor 17 in dem Gehäuse 1 untergebracht ist. Auch ist eine Stellantriebswelle 18 innerhalb des Gehäuses 1 vorgesehen, die von dem Stellantriebsmotor 17 über einen (nicht dargestellten) Riementrieb angetrieben werden kann. Des Weiteren ist ein gehäuseseitiger Wellenausgang 20 vorgesehen, durch den der Abtrieb der Stellantriebswelle 18 abgegriffen werden kann. Auch verfügt der Stellantriebsmotor 17 über eine geeignete Kontaktfahnenaufnahme 19. Die Kontaktfahnenaufnahme 19 zeichnet sich insbesondere dadurch aus, dass die Kontaktfahnen 14 zur elektrischen Konnektierung lediglich eingeschoben werden müssen.

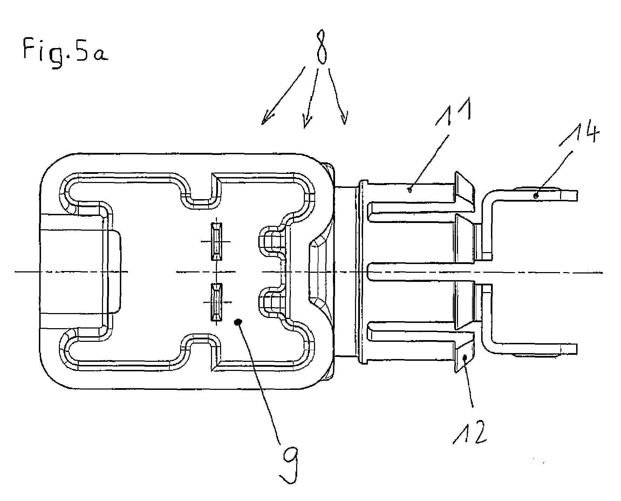

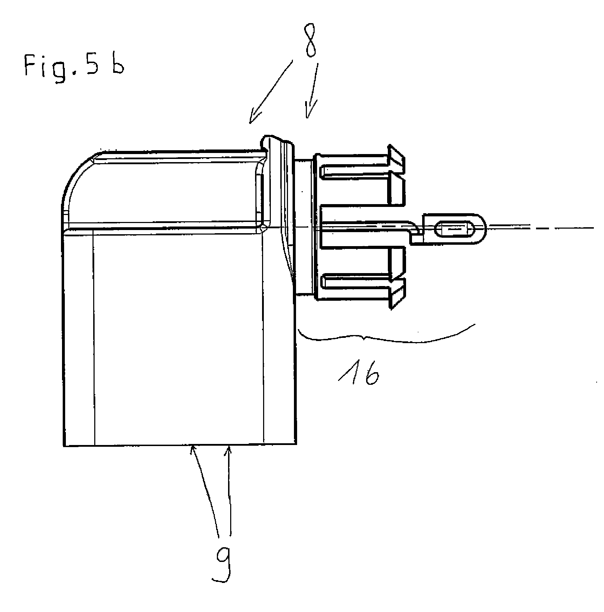

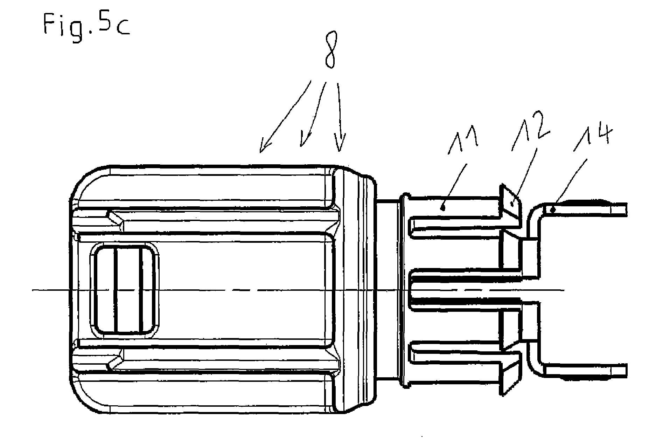

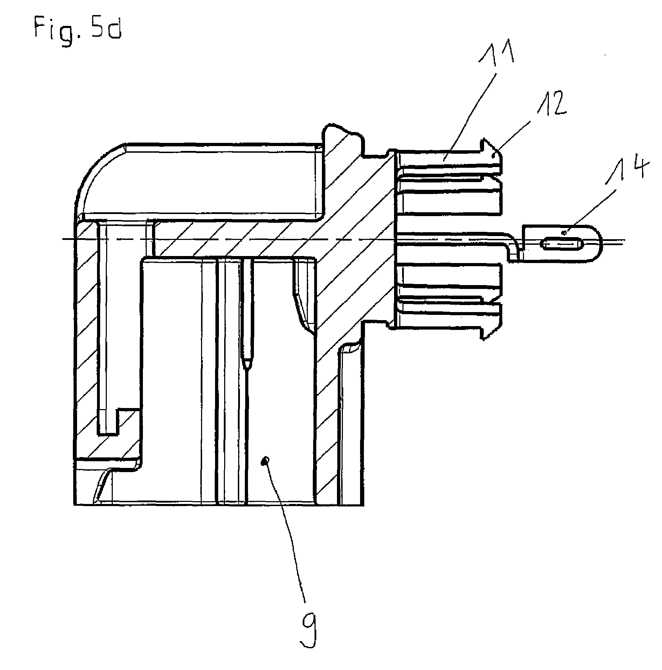

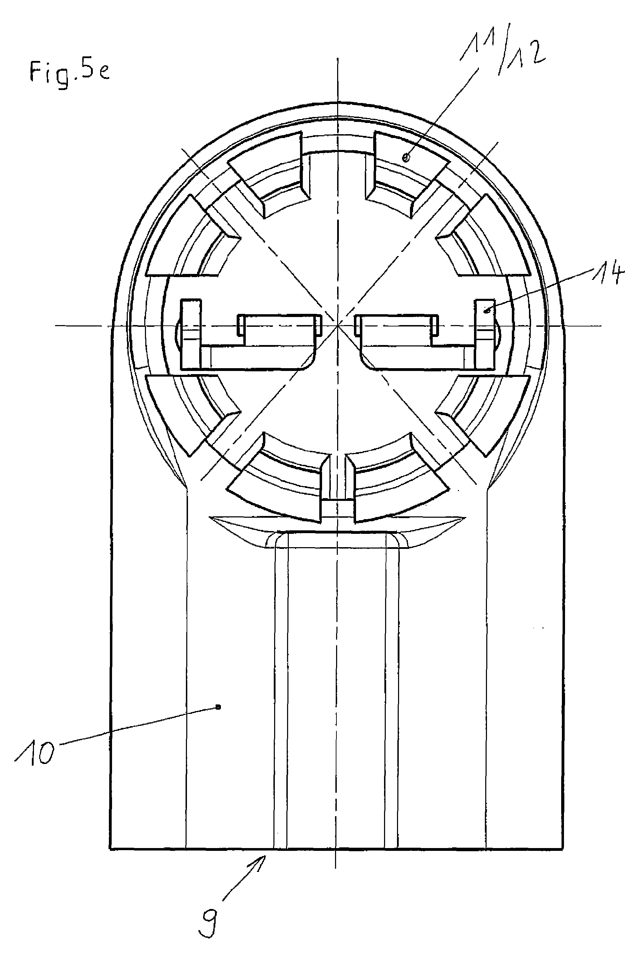

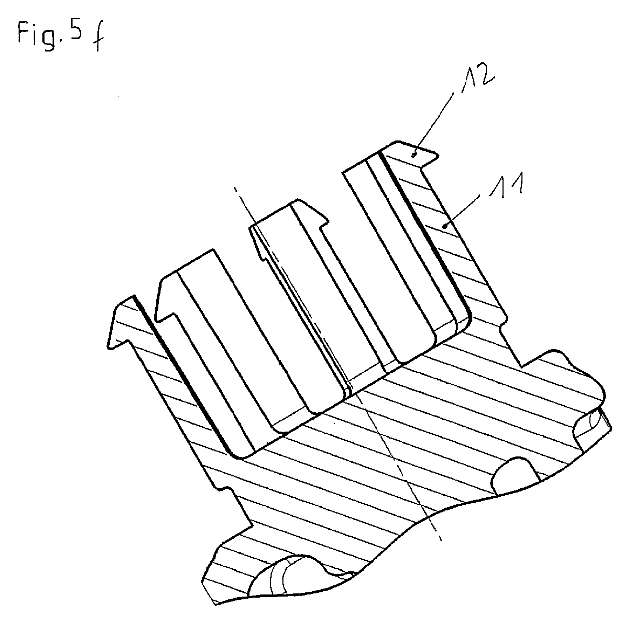

Der erfindungsgemäße Gedanke wird besonders deutlich in Zusammenschau mit den nachfolgenden Fig. 5 bis 7.

In den Fig. 5a bis 5f sind weitere Ansichten des Adapters 8 abgebildet. Hier ist insbesondere die Form der fahrzeugherstellerspezifischen Schnittstelle 9 erkennbar, die von dem jeweiligen Fahrzeughersteller vorgegeben wird. Entsprechend der gewählten Form lässt sich beispielsweise ein geeigneter Verpolschutz für die Fahrzeugherstellerschnittstelle 9 realisieren.

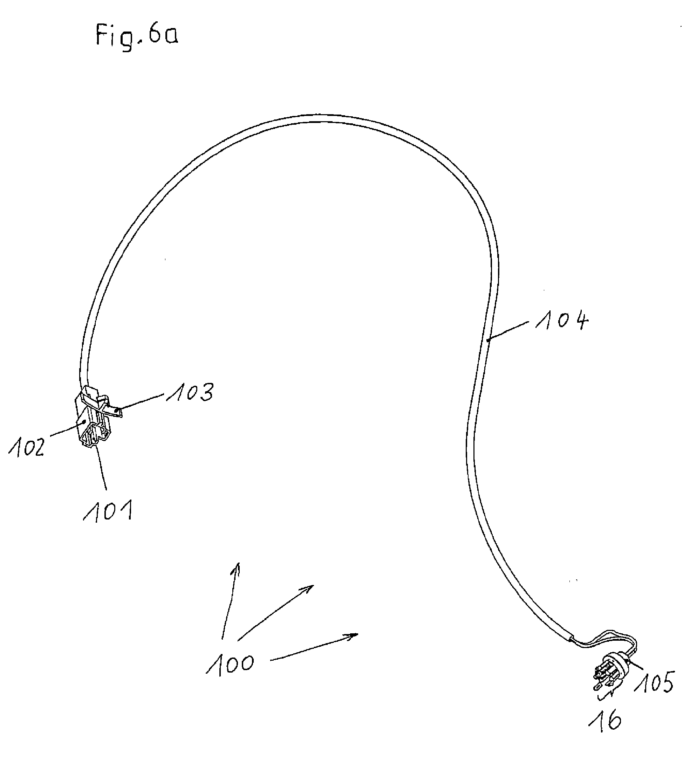

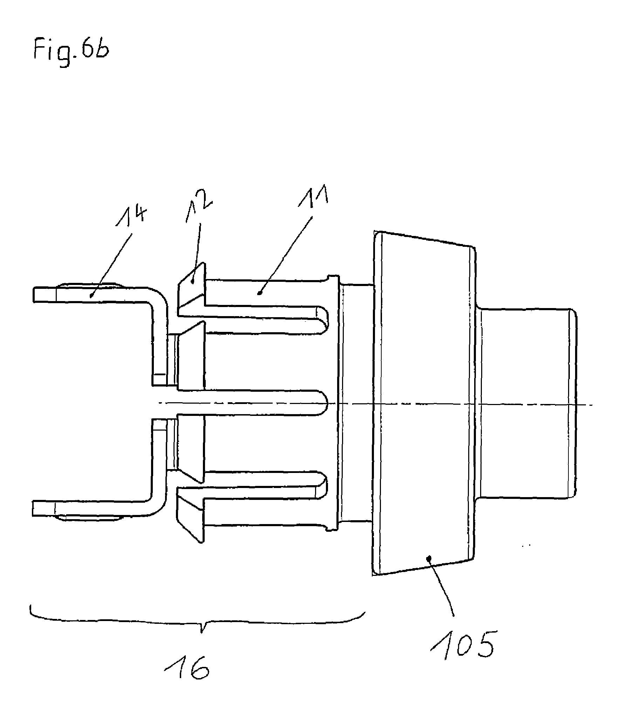

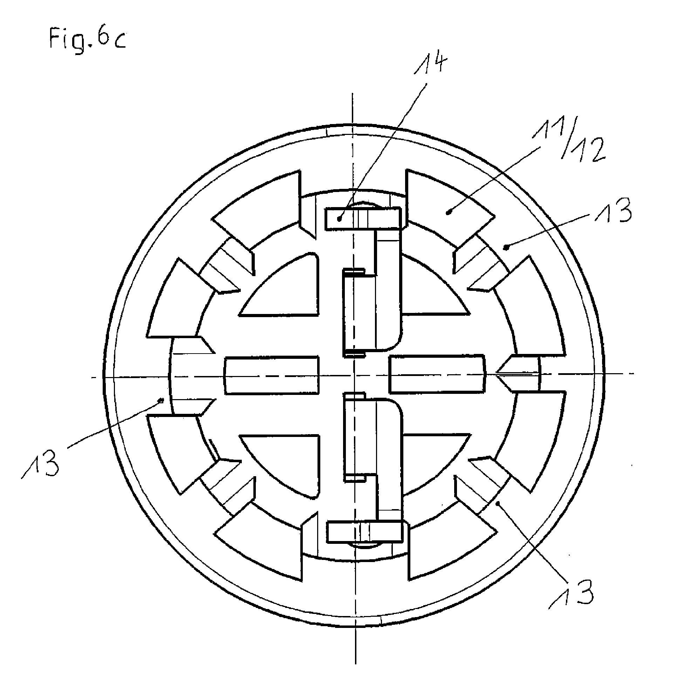

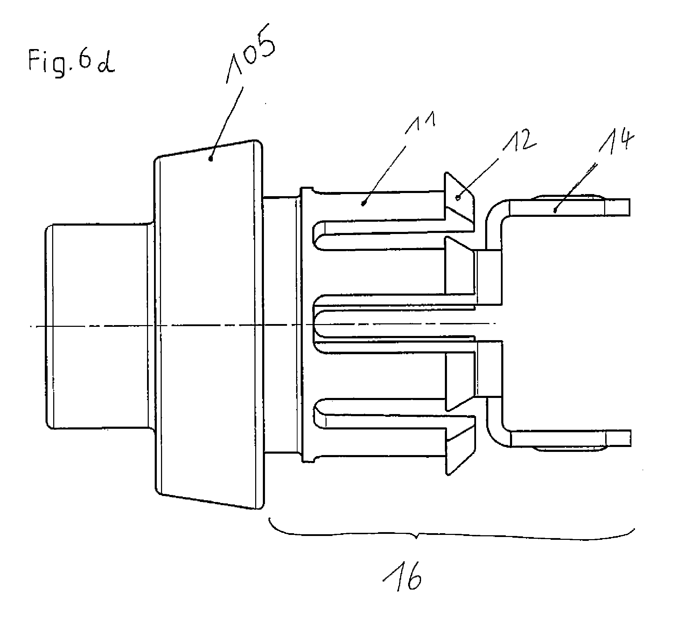

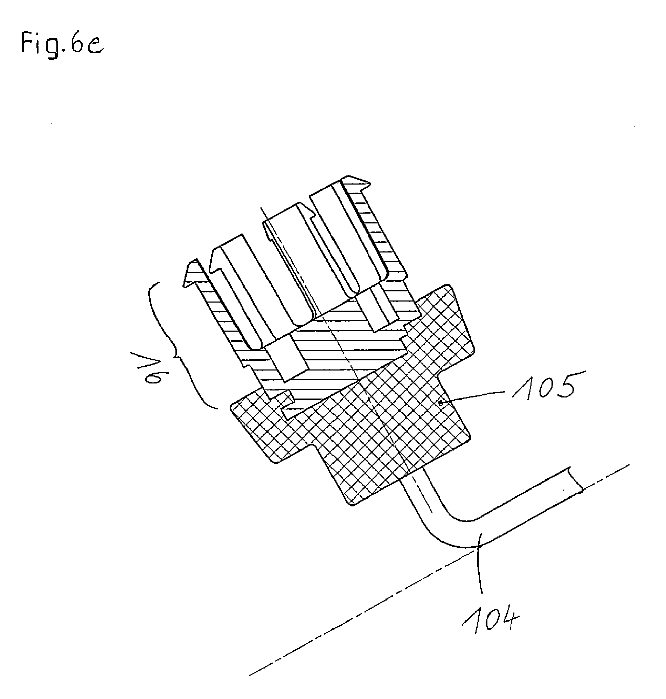

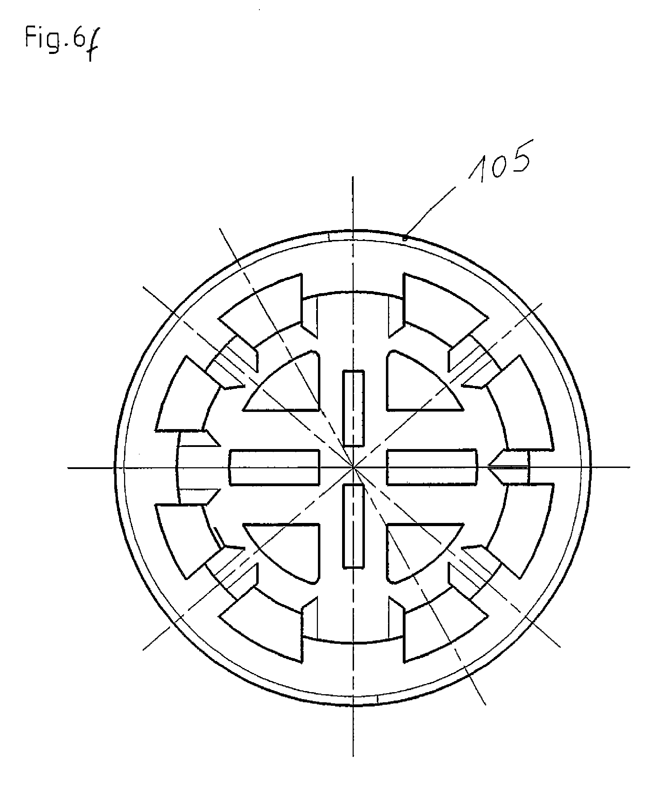

Eine weitere Ausführungsform der vorliegenden Erfindung, insbesondere eines Adapters 100 ist in den Fig. 6a bis 6f dargestellt. Zwar ist hier eine von der Schnittstelle 9 abweichende fahrzeugherstellerspezifische Schnittstelle 101 vorgesehen, jedoch weist auch dieser Adapter 100 das Verbindungsmittel 16 auf, welches mit dem gehäuseseitigen Anschlussflansch 4 verbindbar ist und eine Anschlusseinrichtung ausbildet, die unabhängig von den Vorgaben des Fahrzeugherstellers ausgestaltbar ist. Das Verbindungsmittel 16 ist jedoch in der hier vorgeschlagenen Ausführungsform des vorliegenden Adapters 100 kopfseitig eines Stecker 105 ausgebildet. Auch ist die fahrzeugherstellerspezifische Schnittstelle 101 in einer Buchse 102 ausgebildet, wobei ein Kabel 104 zwischen dem Stecker 105 und der Buchse 102 vorgesehen ist. Des Weiteren ist zum Zwecke der Befestigung der Buchse 102 ein Clip 103 vorgesehen. Der durch die Beibehaltung des Verbindungsmittels 16 ergebende Vorteil liegt auf der Hand. Der Zulieferer kann ein und dasselbe Gehäuse 1 mit dem Anschlussflansch 4 für verschiedene Kraftfahrzeughersteller verwenden, da lediglich eine den Anforderungen des Kraftfahrzeugherstellers angepasste Schnittstelle 9 bzw. 101 vorgesehen werden muss, die jedoch wesentlich unaufwendiger in einem Adapter 100 als in einem Gehäuse 1 vorgesehen sein kann. Hieraus ergibt sich vorteilhafterweise, dass lediglich ein Gehäusewerkzeug zur Herstellung des Gehäuses erstellt und freigeprüft werden muss. Auch wird eine Reduktion der Gehäuseteilewerkzeuge erzielt und eine bessere Verbaubarkeit sichergestellt. Darüber hinaus können auch verschiedene kundenspezifische Stecker angebaut werden. Auch wird der Einsatz eines Kabeladapters möglich. Auch eignet sich das hier vorgeschlagene Prinzip in vorteilhafter Weise zur Realisierung eines Baukastenprinzips und macht den Einsatz eines Kabeladapters möglich. Letztendlich stellt sich eine merkbare Kostenreduktion ein.

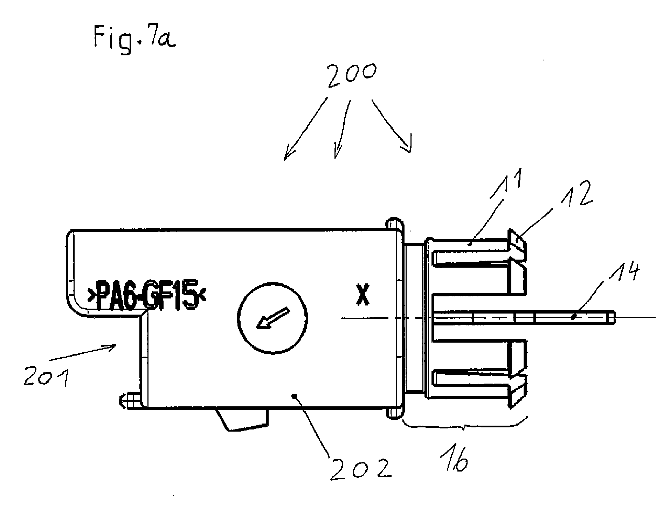

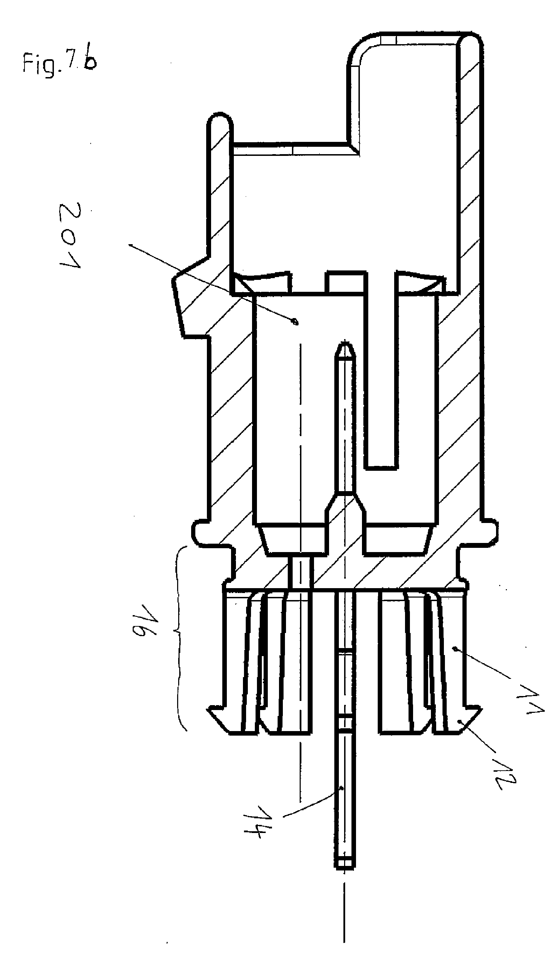

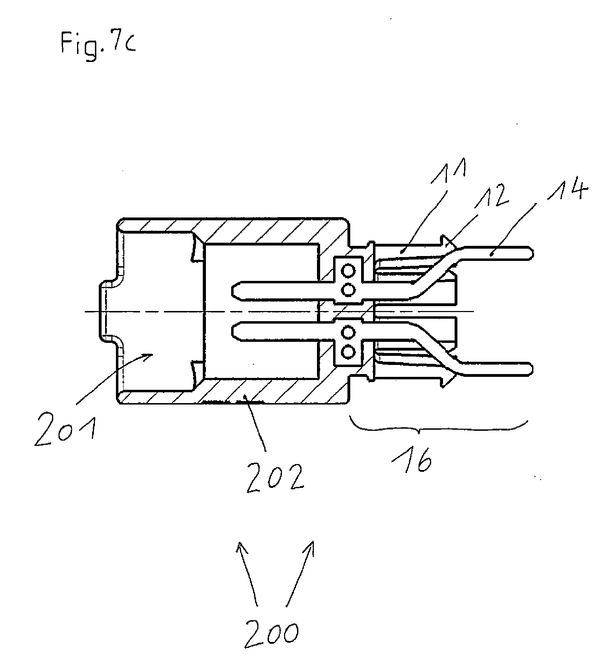

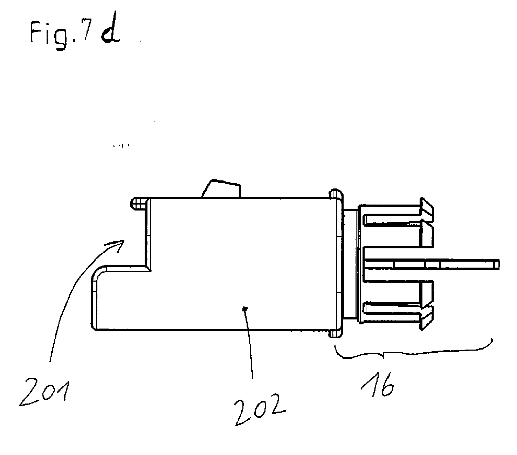

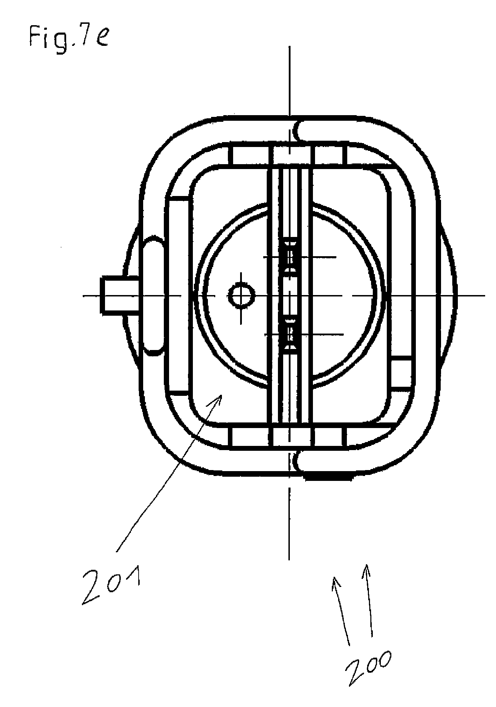

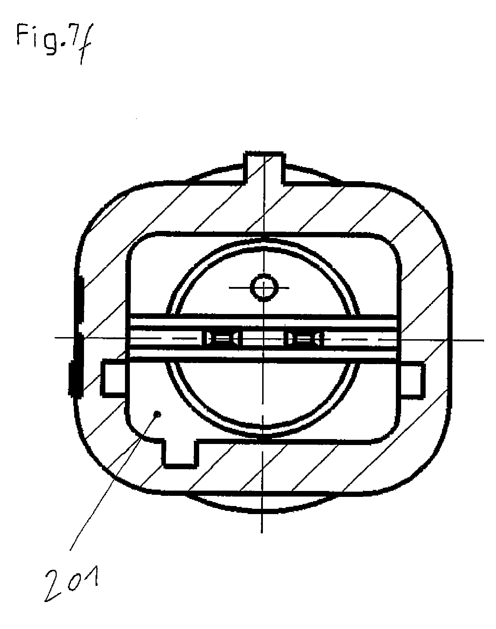

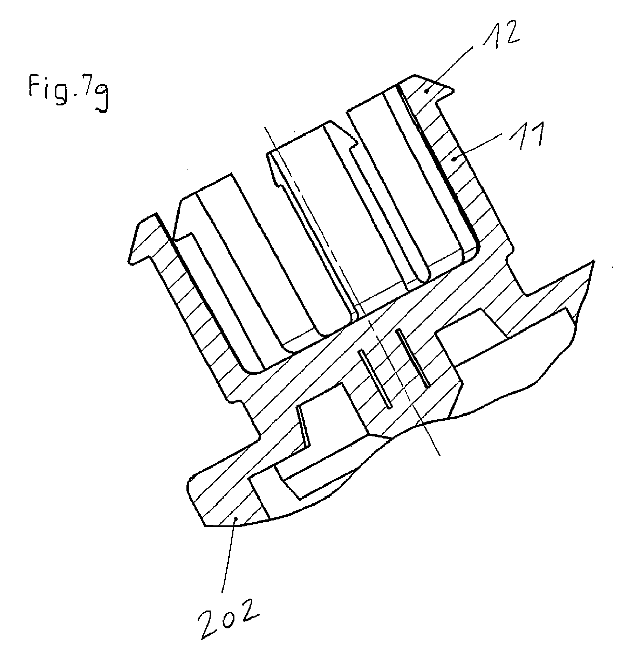

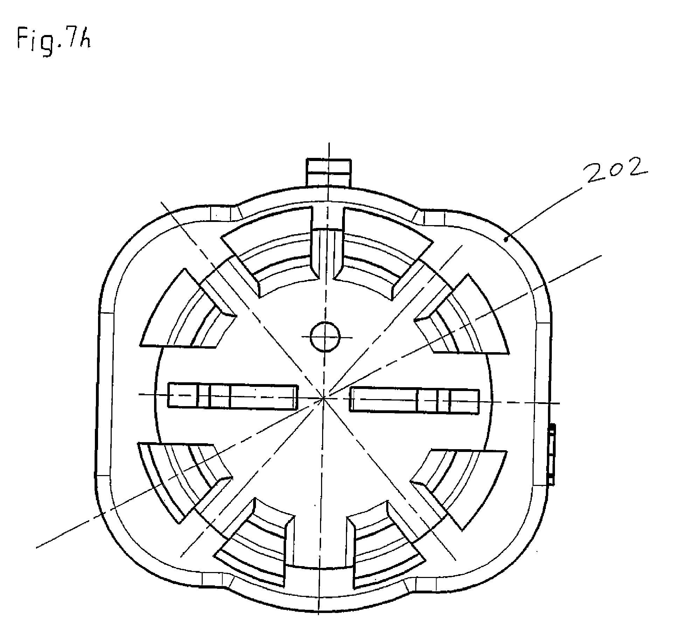

Eine weitere Ausführungsform eines Adapters 200 ist in den Fig. 7a bis 7h dargestellt. Auch hier umfasst der Adapter 200 das Verbindungsmittel 16, jedoch eine wiederum individualisierte Schnittstelle 201. Auch ist ein Gehäuse 202 des Adapters 200 erkennbar.

Es ist selbstverständlich bei allen Ausführungsformen des Adapters vorgesehen, dass eine geeignete elektrische Verbindung zwischen den Kontaktfahnen 14 und der jeweiligen Schnittstelle 9, 101, 201 für das Bordnetz des Kraftfahrzeuges vorgesehen ist.

Teilweise ist auch erkennbar, dass die Kontaktfahnen zu illustrativen Zwecken in den jeweiligen Zeichnungen weggelassen wurden.

## Patentansprüche

1. Gehäuseanordnung zur Aufnahme eines elektrischen Bauteiles in einem Kraftfahrzeug, umfassend
- ein Gehäuse (1), sowie
- eine Schnittstelle (9, 101, 201) zur Verbindung mit dem Bordnetz des Kraftfahrzeuges,
**dadurch gekennzeichnet, dass**
mindestens ein an dem Gehäuse (1) anbringbarer Adapter (8, 100, 200) vorgesehen ist, der mit mindestens der Schnittstelle (9, 101, 201) zur Verbindung mit dem Bordnetz des Kraftfahrzeuges ausgestattet ist.

2. Gehäuseanordnung nach Anspruch 1, **dadurch gekennzeichnet, dass** der Adapter (8, 100, 200) durch eine Anschlusseinrichtung mit dem Gehäuse verbunden ist.

3. Gehäuseanordnung nach einem der vorhergehenden Ansprüche, **dadurch gekennzeichnet, dass** die Anschlusseinrichtung einen gehäuseseitigen Anschlussflansch (4) und ein adapterseitiges Verbindungsmittel (16) umfasst.

4. Gehäuseanordnung nach einem der vorhergehenden Ansprüche, **dadurch gekennzeichnet, dass** Adaptern vorgesehen sind, die mit unterschiedlichen Schnittstellen (9, 101, 201), jedoch mit einem einheitlichen Verbindungsmittel (16) ausgestattet sind.

5. Gehäusevorrichtung nach einem der vorhergehenden Ansprüche, **dadurch gekennzeichnet, dass** dem einheitlichen Verbindungsmittel (16) ein einheitlicher gehäuseseitiger Anschlussflansch (4) zugeordnet ist.

6. Gehäuseanordnung nach einem der vorhergehenden Ansprüche, **dadurch gekennzeichnet, dass** das Gehäuse eine erste Gehäusehälfte (2) und eine zweite Gehäusehälfte (3) umfasst.

7. Gehäuseanordnung nach einem der vorhergehenden Ansprüche, **dadurch gekennzeichnet, dass** der Anschlussflansch (4) einen zylindrischen Kragen (5) umfasst.

8. Gehäuseanordnung nach einem der vorhergehenden Ansprüche, **dadurch gekennzeichnet, dass** der Anschlussflansch (4) mit mindestens einer Nase (7) ausgestattet ist.

9. Gehäuseanordnung nach einem der vorhergehenden Ansprüche, **dadurch gekennzeichnet, dass** der Anschlussflansch (4) mit einer Dichtungsaufnahme (6) ausgestattet ist.

10. Gehäuseanordnung nach einem der vorhergehenden Ansprüche, **dadurch gekennzeichnet, dass** das Verbindungsmittel (16) eine Anzahl von Zapfen (11) mit endseitigen Rasten (12) umfasst.

11. Gehäuseanordnung nach einem der vorhergehenden Ansprüche, **dadurch gekennzeichnet, dass** die Zapfen (11) Zwischenräume (13) zum Eingriff der mindestens einen Nase (7) ausbilden.

12. Gehäuseanordnung nach einem der vorhergehenden Ansprüche, **dadurch gekennzeichnet, dass** das Verbindungsmittel (16) mit Kontaktfahnen (14) ausgestattet ist, die dazu geeignet sind zumindest abschnittsweise in das Gehäuse (1) hineinzuragen.

13. Gehäuseanordnung nach einem der vorhergehenden Ansprüche, **dadurch gekennzeichnet, dass** das Verbindungsmittel (16) mit einer Dichtung (15) ausgestattet ist.

14. Gehäuseanordnung nach einem der vorhergehenden Ansprüche, **dadurch gekennzeichnet, dass** es sich bei dem elektrischern Bauteil um einen Stellantriebsmotor (17) handelt.

15. Gehäuseanordnung nach einem der vorhergehenden Ansprüche, **dadurch gekennzeichnet, dass** der Stellantriebsmotor (17) eine Kontaktfahnenaufnahme (19) zur Aufnahme der Kontaktfahnen (14) aufweist.

16. Gehäuseanordnung nach einem der vorhergehenden Ansprüche, **dadurch gekennzeichnet, dass** der Adapter (8) ein Adaptergehäuse (10) aufweist, wobei das Verbindungsmittel (16) an das Adaptergehäuse (10) angeformt ist und die Schnittstelle (9) innerhalb des Adaptergehäuses (10) ausgeformt ist.

17. Gehäuseanordnung nach einem der vorhergehenden Ansprüche, **dadurch gekennzeichnet, dass** ein Adapter (100) einen Stecker (105) aufweist, wobei das Verbindungsmittel (16) dem Stecker (105) zugeordnet ist, wobei der Adapter (100) weiterhin eine Buchse (102) aufweist, wobei eine Schnittstelle (101) innerhalb der Buchse (102) vorgesehen ist, wobei ein Kabel (104) zwischen Stecker (105) und Buchse (102) vorgesehen ist.

18. Gehäuseanordnung nach einem der vorhergehenden Ansprüche, **dadurch gekennzeichnet, dass** die Buchse (102) mit einem Clip (103) versehen ist.

19. Gehäuseanordnung nach einem der vorhergehenden Ansprüche, **dadurch gekennzeichnet, dass** die Kontaktfahnen (14) mit elektrischen Anschlüssen innerhalb der Schnittstellen (9, 101, 201) verbunden sind.

20. Gehäuseanordnung nach einem der vorhergehenden Ansprüche, **dadurch gekennzeichnet, dass** Kontaktfahnen (14) und Schnittstellen (9, 101, 201) wahlweise gleichgerichtet oder rechtwinkelig zueinander ausgerichtet sind.

21. Adapter (8, 100, 200) für eine Gehäuseanordnung zur Aufnahme eines elektrischen Bauteiles in einem Kraftfahrzeug, umfassend ein Verbindungsmittel (16) zum Anschluss an ein Gehäuse (1), sowie eine Schnittstelle (9, 101, 201) zum Anschluss an eine Bordelektronik eines Kraftfahrzeuges.

22. Adapater nach Anspruch 21, **dadurch gekennzeichnet, dass** es sich um eine Gehäuseanordnung gemäß einem der Ansprüche 1 bis 20 handelt.
